# EUROPEAN PATENT APPLICATION

(11) **EP 4 645 422 A2**
(43) Date of publication of application: **05.11.2025**
(21) Application number: 25173007.3
(22) Date of filing: 28.04.2025
(51) Int. Cl.: H01M 4/13, H01M 50/417, H01M 50/451, H01M 50/457, H01M 50/46, H01M 10/0525, H01M 50/446

(54) **CELL AND LITHIUM BATTERY USING THE SAME**

(30) Priority: 30.04.2024 CN 202410544928; 17.05.2024 CN 202410622519; 05.08.2024 WO PCT/CN2024/109790
(71) Applicant: Eve Power Co., Ltd., Jingmen, Hubei 448000 (CN)
(72) Inventor: LIU, Fanfen, Jingmen, 448000 (CN); ZHANG, Dong, Jingmen, 448000 (CN); ZHANG, Huan, Jingmen, 448000 (CN); ZHU, Zhiyuan, Jingmen, 448000 (CN); YUAN, Dingding, Jingmen, 448000 (CN); HE, Wei, Jingmen, 448000 (CN)
(74) Representative: Mewburn Ellis LLP

(57) **Abstract**

Provided in the present disclosure is a cell, including a positive electrode sheet, a composite separator and a negative electrode sheet provided in sequence. The positive electrode sheet includes a first positive electrode active coating. The negative electrode sheet includes a first negative electrode active coating. The composite separator includes a positive-side porous active layer and a negative-side porous active layer. The positive-side porous active layer includes a non-adhesive polymer C1. The negative-side porous active layer includes a non-adhesive polymer C2. A compaction density of the first positive electrode active coating is in a range of 2.05 g/cm³ to 3.60 g/cm³. A compaction density of the first negative electrode active coating is in a range of 1.40 g/cm³ to 1.85 g/cm³. Composite of the positive electrode sheet and the composite separator is realized by press-fit processing I. Composite of the negative electrode sheet and the composite separator is realized by press-fit processing II.

## Description

### TECHNICAL FIELD

The present disclosure relates to the technical field of batteries, and in particular, to a cell and a lithium battery using the same.

### BACKGROUND

As a key material of a lithium-ion battery, a main function of the separator is to isolate the positive and negative electrodes, avoiding short circuit due to contact between the positive and negative electrodes. At the same time, the separator has a microporous structure, which can provide a channel for the movement of lithium ions. The material of the separator is generally polyethylene, i.e., PE, or polypropylene i.e., PP.

### SUMMARY

The PE or PP separator does not fit tightly to the electrode sheets, which is likely to cause the electrode sheet to be wrinkled and the internal resistance to be increased, and then cause a series of electrical performance and safety performance problems of the battery.

In a first aspect, a cell is provided in the present disclosure. The cell includes a positive electrode sheet, a composite separator and a negative electrode sheet provided in sequence. The positive electrode sheet includes a positive electrode current collector and a first positive electrode active coating, which is provided on a surface of the positive electrode current collector facing the composite separator. The negative electrode sheet includes a negative electrode current collector and a first negative electrode active coating, which is provided on a surface of the negative electrode current collector facing the composite separator. The composite separator includes a porous substrate layer, a positive-side porous active layer, and a negative-side porous active layer. A surface of the porous substrate layer facing the positive electrode sheet is a first surface, and the positive-side porous active layer is provided on the first surface. A surface of the porous substrate layer facing the negative electrode sheet is a second surface, and the negative-side porous active layer is provided on the second surface. The positive-side porous active layer includes a first base coating and a non-adhesive polymer C1 embedded in the first base coating, a particle size D₅₀ of the non-adhesive polymer C1 > a thickness of the first base coating. The negative-side porous active layer includes a second base coating and a non-adhesive polymer C2 embedded in the second base coating, a particle size D₅₀ of the non-adhesive polymer C2 > a thickness of the second base coating. A compaction density of the first positive electrode active coating is in a range of 2.05 g/cm³ to 3.60 g/cm³. A compaction density of the first negative electrode active coating is in a range of 1.40 g/cm³ to 1.85 g/cm³. Composite of the positive electrode sheet and the composite separator is realized by press-fit processing I, a press-fit temperature T1 of the press-fit processing I satisfies 50 °C ≤ T1< a Tg value of the non-adhesive polymer C1, and a press-fit pressure of the press-fit processing I is not less than 0.2 tons. Composite of the negative electrode sheet and the composite separator is realized by press-fit processing II, a press-fit temperature T2 of the press-fit processing II satisfies 28 °C ≤ T2 < a Tg value of the non-adhesive polymer C2, and a press-fit pressure of the press-fit processing II is not less than 0.2 tons. The compaction density of the first positive electrode active coating may be 2.05 g/cm³, 2.2 g/cm3, 2.35 g/cm³, 2.5 g/cm³, 2.65 g/cm³, 2.7 g/cm³, 2.85 g/cm³, 3.0 g/cm³, 3.15 g/cm³, 3.30 g/cm³, 3.45 g/cm³, 3.60 g/cm³, etc., but is not limited to the enumerated values, and other values within the range but not enumerated are also applicable. The compaction density of the first negative electrode active coating may be 1.40 g/cm³, 1.50 g/cm³, 1.60 g/cm³, 1.70 g/cm³, 1.80 g/cm³, 1.85 g/cm³, etc., but is not limited to the enumerated values, and other values within the rang but not enumerated are also applicable.

In a second aspect, a lithium battery is provided in the present disclosure, including the above cell.

In the composite cell provided in the present disclosure, the positive electrode sheet is provided with a first positive active coating with a specific compaction density, and the surface of the positive electrode sheet is relatively smooth, on which a few pores are provided. Based on this, the surface of the positive-side porous active layer of the composite separator is formed with an obvious protruding structure by setting the non-adhesive polymer C1, and the composite separator and positive electrode sheet are composited under the condition of the press-fit processing I at a relatively high temperature. Thereby, the protruding structure formed by the non-adhesive polymer C1 is capable of sufficiently and effectively filling the relatively small pores on the surface of the positive electrode sheet, so as to realize a tight fit between the composite separator and the positive electrode sheet. Moreover, due to the relatively high Tg value and excellent mechanical performance of the non-adhesive polymer C1, it is conducive to making the composite separator have sufficient structural and thermal stability. The negative electrode sheet is provided with the first negative electrode active coating with a specific compaction density, and the surface of the negative electrode sheet is smooth rougher, on which many pores are provided. Based on this, the surface of the negative-side porous active layer of the composite separator is formed with an obvious protruding structure by setting a non-adhesive polymer C2, and the composite separator is composited with the negative electrode sheet under the condition of the press-fit processing II at a relatively low temperature. Thereby, the protruding structure formed by the non-adhesive polymer C2 is easy to be inserted into the relatively large pores on the surface of the negative electrode sheet, so as to realize the tight fit between the composite separator and the positive electrode sheet.

In summary, the cell provided in the present disclosure adjust the compaction density of the first positive and negative active coatings facing the composite separator. Based on this, the compositing conditions of the composite separator and the positive and negative electrode sheets are further targeted to be limited, so that it is possible to maintain stable and firm compositing between the composite separator and the positive and negative electrode sheets, thereby effectively improving the bonding effect between the composite separator and the positive and negative electrode sheets, and improving the structural stability and cycling stability of the cell.

### DETAILED DESCRIPTION

In some implementations, the non-adhesive polymer C1 is selected from one or more of polymethyl acrylate, polyethyl acrylate, polybutyl acrylate, polymethyl methacrylate, butyl acrylate-styrene copolymer, ethylene-acrylic copolymer, ethylene-methyl acrylate copolymer, ethylene-ethyl acrylate copolymer, ethylene-butyl acrylate copolymer, and ethylene-methyl methacrylate copolymer.

In some implementations, the non-adhesive polymer C2 is selected from one or more of polymethyl acrylate, polyethyl acrylate, polybutyl acrylate, polymethyl methacrylate, butyl acrylate-styrene copolymer, ethylene-acrylic copolymer, ethylene-methyl acrylate copolymer, ethylene-ethyl acrylate copolymer, ethylene-butyl acrylate copolymer, and ethylene-methyl methacrylate copolymer.

In some implementations, a ratio of the particle size D₅₀ of the non-adhesive polymer C1 to the thickness of the first base coating is (1.3-4):1. The ratio of the particle size D₅₀ of the non-adhesive polymer C1 to the thickness of the first base coating may be 1.3:1, 2:1, 2.7:1, 3.4:1, 4:1, etc., but is not limited to the enumerated values, and other values within the range but not enumerated are also applicable. By reasonably setting the ratio of the particle size D₅₀ of the non-adhesive polymer C1 to the thickness of the first base coating, it is conducive to ensuring that the non-adhesive polymer C1 can be stably and firmly embedded in the first base coating of the composite separator, and thereby it is further conducive to enabling the protruding structure formed by the non-adhesive polymer C1 to be stably and firmly embedded in pores of the positive electrode sheet, so as to enable the bonding effect between the composite separator and the positive electrode sheet to be effectively improved.

In some implementations, the thickness of the first base coating is in a range of 1 µm to 4 µm, the particle size D₅₀ of the non-adhesive polymer C1 is in a range of 3 µm to 7 µm, and the thickness of the first positive electrode active coating is in a range of 40 µm to 150 µm.

In some implementations, a ratio of the particle size D₅₀ of the non-adhesive polymer C2 to the thickness of the second base coating is (1.3-4):1. The ratio of the particle size D₅₀ of the non-adhesive polymer C2 to the thickness of the second base coating may be 1.3:1, 2:1, 2.7:1, 3.4:1, 4:1, etc., but is not limited to the enumerated values, and other values within the range but not enumerated are also applicable. By reasonably setting the ratio of the particle size D₅₀ of the non-adhesive polymer C2 to the thickness of the second base coating, it is conducive to ensuring that the non-adhesive polymer C2 can be stably and firmly embedded in the second base coating of the composite separator, and thereby it is further conducive to enabling the protruding structure formed by the non-adhesive polymer C2 to be stably and firmly embedded in pores of the negative electrode sheet, so as to enable the bonding effect between the composite separator and the negative electrode sheet to be effectively improved.

In some implementations, the thickness of the first base coating is in a range of 1 µm to 4 µm, the particle size D₅₀ of the non-adhesive polymer C2 is in a range of 3 µm to 7 µm, and the thickness of the first negative electrode active coating is in a range of 40 µm to 100 µm.

In some implementations, a mass percentage, i.e., a weight percentage, of the non-adhesive polymer C1 in the positive-side porous active layer is in a range of 3% to 22%. The mass percentage of the non-adhesive polymer C1 in the positive-side porous active layer may be 3%, 7%, 11%, 15%, 19%, 22%, etc., but is not limited to the enumerated values, and other values within the range but not enumerated are also applicable. Since the above positive electrode sheet has a low porosity, by effectively regulating the content of the non-adhesive polymer C1 in the positive-side porous active layer, the surface of the composite separator is provided with a sufficient amount of protruding structures, which effectively increases the probability of the non-adhesive polymer C1 being embedded in the first positive electrode active coating of the positive electrode sheet, so as to increase the fit between the composite separator and the positive electrode sheet. Moreover, the above content of the non-adhesive polymer C1 with the high Tg value can effectively ensure the heat shrinkage performance and air permeability of the separator, so that the battery has excellent electrical performance and safety performance.

In some implementations, the mass percentage, i.e., the weight percentage, of the non-adhesive polymer C1 in the positive-side porous active layer is in a range of 17% to 22%.

In some implementations, a mass percentage, i.e., a weight percentage, of the non-adhesive polymer C2 in the negative-side porous active layer is in a range of 2% to 17%. The mass percentage of the non-adhesive polymer C2 in the negative-side porous active layer may be 2%, 5%, 7%, 9%, 11%, 13%, 15%, 17%, etc., but is not limited to the enumerated values, and other values within the range but not enumerated are also applicable. Since the Tg value of the non-adhesive polymer C2 is relatively low, a larger amount of the non-adhesive polymer C2 is likely to cause an increase in the thermal shrinkage and a decrease in the thermal stability of the composite separator, by further effectively adjusting the content of the non-adhesive polymer C2 in the negative-side porous active layer, an appropriate content of the non-adhesive polymer C2 with the low Tg value is capable of ensuring the excellent thermal shrinkage performance of the composite separator, and is also capable of ensuring an appropriate amount of protruding structures on the surface of the composite separator, so that the fit between the composite separator and the negative electrode sheet is maintained at a high level.

In some implementations, the mass percentage, i.e.,the weight percentage, of the non-adhesive polymer C2 in the negative-side porous active layer is in a range of 7% to 12%.

In some implementations, a Tg value of the non-adhesive polymer C1 is in a range of 55 °C to 90 °C. The Tg value of the non-adhesive polymer C1 may be 55 °C, 65 °C, 75 °C, 85 °C, 90 °C, etc., but is not limited to the enumerated values, and other values within the range but not enumerated are also applicable. The non-adhesive polymer C1 within the above Tg value range has good mechanical performance, and has sufficient elasticity to be fully inserted into the pores of the positive electrode sheet during the compositing process of the composite separator and the positive electrode sheet, improving the fit between the composite separator and the positive electrode sheet, and its mechanical strength is high, which enables the thermal stability of the composite separator and the cycle stability of the battery to be improved.

In some implementations, a Tg value of the non-adhesive polymer C2 is in a range of 30 °C to 90 °C. The Tg value of the non-adhesive polymer C2 may be 30 °C, 40 °C, 50 °C, 60 °C, 70 °C, 80 °C, 90 °C, etc., but is not limited to the enumerated values, and other values within the range but not enumerated are also applicable. The non-adhesive polymer C2 within the above Tg value range is likely to be stably and firmly embedded in the pores of the negative electrode sheet during the compositing process of the composite separator and the negative electrode sheet, so that the fit between the composite separator and the negative electrode sheet is improved.

In some implementations, a Tg value of the non-adhesive polymer C2 is in a range of 30 °C to 53 °C.

In some implementations, a press-fit temperature T1 of the press-fit processing I is in a range of 50 °C to 70 °C, and a press-fit pressure of the press-fit processing I is in a range of 0.2 tons to 14 tons (t). a press-fit temperature T2 of the press-fit processing II is in a range of 28 °C to 48 °C, and a press-fit pressure of the press-fit processing II is in a range of 0.2 tons (t) to 14 tons (t). The press-fit temperature T1 of the press-fit processing I may be 50 °C, 60 °C, 70 °C, etc., and the press-fit pressure of the press-fit processing I may be 0.2 tons, 1 ton, 3 tons, 5 tons, 7 tons, 9 tons, 11 tons, 13 tons, 14 tons, etc., which are not limited to the enumerated values, and other values within the range but not enumerated are also applicable. The press-fit temperature T2 of the press-fit processing II may be 28 °C, 38 °C, 48 °C, etc., and the press-fit pressure of the press-fit processing II may be 0.2 tons, 1 ton, 3 tons, 5 tons, 7 tons, 9 tons, 11 tons, 13 tons, 14 tons, etc., which are not limited to the listed values, and other values within the range but not enumerated are also applicable.

In some implementations, the first positive electrode active coating includes a first positive electrode active material, and a particle size D₅₀ of the first positive electrode active material is in a range of 0.1 µm to 20 µm. The first negative electrode active coating includes a first negative electrode active material, and a particle size D₅₀ of the first negative electrode active material is in a range of 5 µm to 20 µm.

In some implementations, the first positive electrode active material includes at least one of lithium iron phosphate, lithium manganese iron phosphate, ternary material, lithium cobaltate, and lithium manganate.

In some implementations, the first negative electrode active material includes at least one of graphite, hard carbon, soft carbon, and silicon-based material.

### Example 1

a lithium battery is provided in the present example, and a preparation method for the lithium battery includes the following steps.

### 1. Preparation of a positive electrode sheet:

A first positive active material (lithium iron phosphate with a particle size D₅₀ of 0.95 µm), a conductive agent conductive carbon black SP, and a binder polyvinylidene fluoride (PVDF) were mixed uniformly in accordance with a mass ratio of 94:3:3, and dispersed in N-methylpyrrolidone (NMP) to obtain a positive electrode slurry, which was coated on an aluminum foil, and dried at 85 °C in a vacuum environment for 24 h to obtain a positive electrode sheet.

The positive electrode sheet included a positive electrode current collector and a first positive electrode active coating, and the first positive electrode active coating had a compaction density of 2.45 g/cm³.

### 2. Preparation of a negative electrode sheet:

The first negative electrode active material (graphite with a particle size D₅₀ of 12.5 µm), a conductive agent conductive carbon black (SP), and a binder sodium carboxymethyl cellulose (CMC) were mixed uniformly in accordance with a mass ratio of 92:4:4, and dispersed in deionized water to obtain a negative electrode slurry, which was coated on a copper foil, and dried at 100 °C in a vacuum environment for 12 h to obtain a negative electrode sheet.

The negative electrode sheet includes a negative electrode current collector and a first negative electrode active coating, and the first negative electrode active coating had a compaction density of 1.50 g/cm³.

### 3. Preparation of separator:

In step S1, polyethylene (PE) porous substrate was added to a material tank, and a porous substrate layer was obtained by extruding, casting, longitudinal stretching, extracting and heat-setting.

In step S2, inorganic particles A of alumina, binder polymer B of polyvinylidene fluoride, and non-adhesive polymer C1 of butyl acrylate-styrene copolymer were added into a mixing tank in accordance with a mass ratio of 76:4:20, and a solvent was added and stirred to disperse uniformly, and then was continuously stirred at a stirring speed of 1000 rpm for 100 min to form a first coating slurry; and
inorganic particles A of alumina, binder polymer B of polyvinylidene fluoride, and non-adhesive polymer C2 of butyl acrylate-styrene copolymer were added into a mixing tank in accordance with a mass ratio of 86:4:10, and a solvent was added and stirred to disperse uniformly, and then was continuously stirred at a stirring speed of 1000 rpm for 100 min to form the second coating slurry.

In step S3, the first coating slurry was coated on a first surface of the porous substrate layer, i.e., a surface of the porous substrate layer facing the positive electrode sheet as the first surface, to form a positive electrode-side porous active layer. The positive electrode-side porous active layer included a first base coating and a non-adhesive polymer C1 embedded in the first base coating. The thickness of the first base coating was 2.0 µm, the particle size D₅₀ of the non-adhesive polymer C1 was 5.1 µm, the mass percentage of the non-adhesive polymer C1 in the positive-side porous active layer was 20%, and the Tg value of the non-adhesive polymer C1 was 60 °C. The non-adhesive polymer C1 was composed of butyl acrylate-styrene copolymer, and butyl acrylate-styrene copolymer was prepared from butyl acrylate and styrene in a molar ratio of 2.6:7.4.

In step S4, the second coating slurry was coated on a second surface of the porous substrate layer, i.e., a surface of the porous substrate layer facing the negative electrode sheet as the second surface, to form a negative electrode-side porous active layer. The negative electrode-side porous active layer included a second base coating and a non-adhesive polymer C2 embedded in the second base coating. The thickness of the second base coating was 2.0 µm, the particle size D₅₀ of the non-adhesive polymer C2 was 5.1 µm, the mass percentage of the non-adhesive polymer C2 in the negative-side porous active layer was 10%, and the Tg value of the non-adhesive polymer C2 was 40 °C. The non-adhesive polymer C2 was composed of butyl acrylate-styrene copolymer, and butyl acrylate-styrene copolymer was prepared from butyl acrylate and styrene in a molar ratio of 3.8:6.2.

In step S5, after the coating was completed, oven drying was performed, and a composite separator was prepared after drying.

### 4. Preparation of electrolyte:

Ethylene carbonate, i.e., EC, ethyl methyl carbonate, i.e., EMC, diethyl carbonate, i.e., DEC were mixed in accordance with a volume ratio of 1:1:1 to obtain an organic solvent, and then sufficiently dried lithium salt LiPF6 was dissolved in the organic solvent to prepare electrolyte with a concentration of 1 mol/L.

### 5. Preparation of a cell:

(1) Compositing of the composite separator and the positive electrode sheet: press-fit processing I, with a press-fit temperature T1 of 52 °C, a press-fit pressure of 1.2 t, and a press-fit time of 3 s;
(2) compositing of the composite separator and the negative electrode sheet: press-fit processing II, with a press-fit temperature T1 of 30 °C, a press-fit pressure is 0.8 t, and a press-fit time of 1 s; and
(3) a bare cell was prepared.

### 6. Assembly of a lithium battery

The bare cell was put in the outer packaging housing, was injected into the above electrolyte after being dried, and was carried out vacuum encapsulation, set aside, formation, and capacity grading process, so as to prepare a lithium battery.

### Example 2

In the present example, a lithium battery was prepared with reference to Example 1, and the present example was different from Example 1 in that the particle size D₅₀ of the non-adhesive polymer C1 employed in the present example was 10 µm. Other than the above difference, the materials and the process operations used in the present example were strictly consistent with that of Example 1.

### Example 3

In the present example, a lithium battery was prepared with reference to Example 1, and the present example was different from Example 1 in that the particle size D₅₀ of the non-adhesive polymer C1 employed in the present example was 2.2 µm. Other than the above difference, the materials and the process operations used in the present example were strictly consistent with that of Example 1.

### Example 4

The present embodiment refers to Example 1 to prepare the lithium battery, and the present example was different from Example 1 in that the particle size D₅₀ of the non-adhesive polymer C2 employed in the present embodiment was 10 µm. Other than the above difference, the materials and the process operations used in the present example were strictly consistent with that of Example 1.

### Example 5

In the present example, a lithium battery was prepared with reference to Example 1, and the present example was different from Example 1 in that the particle size D₅₀ of the non-adhesive polymer C2 employed in the present example was 2.2 µm. Other than the above difference, the materials and the process operations used in the present example were strictly consistent with that of Example 1.

### Example 6

In the present example, a lithium battery was prepared with reference to Example 1, and the present example was different from Example 1 in that, during the compositing process of the separator in the present example, the mass percentage of the non-adhesive polymer C1 in the positive-side porous active layer was 2%. Other than the above difference, the materials and the process operations used in the present example were strictly consistent with that of Example 1.

### Example 7

In the present example, a lithium battery was prepared with reference to Example 1, and the present example was different from Example 1 in that, during the compositing process of the separator in the present example, the mass percentage of the non-adhesive polymer C1 in the positive-side porous active layer was 25%. Other than the above difference, the materials and the process operations used in the present example were strictly consistent with that of Example 1.

### Example 8

The present example refers to Example 1 to prepare the lithium battery, and the present example was different from Example 1 in that, during the compositing process of the separator in the present example, the mass percentage of the non-adhesive polymer C2 in the positive-side porous active layer was 1%. Other than the above difference, the materials and the process operations used in the present example were strictly consistent with that of Example 1.

### Example 9

The present example refers to Example 1 to prepare the lithium battery, and the present example was different from Example 1 in that, during the compositing process of the separator in the present example, the mass percentage of the non-adhesive polymer C2 in the positive-side porous active layer was 18%. Other than the above difference, the materials and the process operations used in the present example were strictly consistent with that of Example 1.

### Example 10

The present example refers to Example 1 to prepare the lithium battery, and the present example was different from Example 1 in that the Tg value of the non-adhesive polymer C1 employed in the present example was 90 °C, in which the non-adhesive polymer C1 was composed of polymethyl methacrylate and butyl acrylate-styrene copolymer, a molar ratio of polymethyl methacrylate and butyl acrylate-styrene copolymer was 8.4:1.6, and butyl acrylate-styrene copolymer was prepared from butyl acrylate and styrene in a molar ratio of 2.6:7.4. Other than the above difference, the materials and the process operations used in the present example were strictly consistent with that of Example 1.

### Example 11

The present example refers to Example 1 to prepare the lithium battery, and the present example was different from Example 1 in that the Tg value of the non-adhesive polymer C2 employed in the present example was 90 °C, in which the non-adhesive polymer C2 was composed of polymethyl methacrylate and butyl acrylate-styrene copolymer, a molar ratio of polymethyl methacrylate and butyl acrylate-styrene copolymer was 8.4:1.6, and butyl acrylate-styrene copolymer was prepared from butyl acrylate and styrene in a molar ratio of 2.6:7.4. Other than the above difference, the materials and the process operations used in the present example were strictly consistent with that of Example 1.

### Example 12

In the present example, a lithium battery was prepared with reference to Example 1, and the present example was different from Example 1 in that, during the compositing process of the composite separator and the positive electrode sheet, the press-fit temperature was 50 °C and the press-fit pressure was 0.2 tons. Other than the above difference, the materials and the process operations used in the present example were strictly consistent with that of Example 1.

### Example 13

In the present example, a lithium battery was prepared with reference to Example 1, and the present example was different from Example 1 in that, during the compositing process of the composite separator and the positive electrode sheet, the press-fit temperature was 50 °C and the press-fit pressure was 0.2 tons. Other than the above difference, the materials and the process operations used in the present example were strictly consistent with that of Example 1.

### Contrast Example 1

In the present contrast example, a lithium battery was prepared with reference to Example 1, and the present contrast example was different from Example 1 in that, during the compositing process of the composite separator and the positive electrode sheet, the press-fit temperature was 70 °C. Other than the above difference, the materials and the process operations used in the present contrast example were strictly consistent with that of Example 1.

### Contrast Example 2

In the present contrast example, a lithium battery was prepared with reference to Example 1, and the present contrast example was different from Example 1 in that, during the compositing process of the composite separator and the positive electrode sheet, the press-fit temperature was 45 °C. Other than the above difference, the materials and the process operations used in the present contrast example were strictly consistent with that of Example 1.

### Contrast Example 3

In the present contrast example, a lithium battery was prepared with reference to Example 1, and the present contrast example was different from Example 1 in that, during the compositing process of the composite separator and the negative electrode sheet, the press-fit temperature was 48 °C. Other than the above difference, the materials and the process operations used in the present contrast example were strictly consistent with that of Example 1.

### Contrast Example 4

In the present contrast example, a lithium battery was prepared with reference to Example 1, and the present contrast example was different from Example 1 in that, during the compositing process of the composite separator and the negative electrode sheet, the press-fit temperature was 20 °C. Other than the above difference, the materials and the process operations used in the present contrast example were strictly consistent with that of Example 1.

### Test Example 1

### 1. Test objects:

Examples 1 to 13 and Contrast Examples 1 to 4 were used as test objects for the present test example.

### 2. Test items:

(1) A test of a bonding force between the composite separator and the positive electrode sheet: a peeling force between the composite separator and the positive electrode sheet was tested by a tensile machine.
(2) A test of a bonding force between composite separator and negative electrode sheet: a peeling force between the composite separator and the negative electrode sheet was tested by a tensile machine.
(3) A capacity retention rate of high-temperature cycling of a battery: a battery was charged and discharged by Xinwei equipment under test environment of 45 °C, then was charge to 3.65 V with a current of 1 C in a manner of a constant current and a constant voltage, and then was discharged to 2.5 V with a current of 1 C in a manner of a constant current after being set aside for 10 minutes. A final result was expressed as the capacity retention rate charging and discharging with 1 C/1 C after 300 cycles, and a calculation formula is as follows: capacity retention rate (%) = discharge capacity per cycle / discharge capacity after first discharging × 100%.

### 3. Test results:

**Table 1 Performance test results of lithium batteries in Examples 1 to 13 and in Contrast Examples 1 to 4**

| Group | Bonding force between composite separator and positive electrode sheet (N/m) | Bonding force between composite separator and negative electrode sheet (N/m) | Capacity Retention Rate of High-temperature Cycling (%) |
|---|---|---|---|
| Example 1 | 6.8 | 6.2 | 95.1 |
| Example 2 | 5.4 | 6.1 | 94.5 |
| Example 3 | 4.9 | 6.0 | 94.3 |
| Example 4 | 6.6 | 5.2 | 94.7 |
| Example 5 | 6.8 | 4.8 | 94.4 |
| Example 6 | 3.5 | 6.0 | 93.2 |
| Example 7 | 6.8 | 6.1 | 95.0 |
| Example 8 | 6.6 | 3.2 | 93.2 |
| Example 9 | 6.7 | 6.1 | 93.4 |
| Example 10 | 4.3 | 6.1 | 93.8 |
| Example 11 | 6.7 | 4.2 | 93.9 |
| Example 12 | 4.6 | 6.1 | 94.0 |
| Example 13 | 6.6 | 4.4 | 94.1 |
| Contrast Example 1 | 2.1 | 6.1 | 91.8 |
| Contrast Example 2 | 1.7 | 6.0 | 91.2 |
| Contrast Example 3 | 6.7 | 1.8 | 91.6 |
| Contrast Example 4 | 6.6 | 1.5 | 90.3 |

The test results were shown in Table 1. By comparing the performance test results corresponding to Example 1 and Contrast Example 1, it was found that the bonding force between the composite separator and the positive electrode sheet prepared in Contrast Example 1 was significantly lower than that in Example 1, and the capacity retention rate of the high-temperature cycling of the battery was significantly lower than that in Example 1. The reason was that, under the same conditions of other materials and operations for preparing the battery, during the compositing process of the positive electrode sheet and the composite separator, the press-fit temperature T1 of Contrast Example 1 was higher than the Tg value (60 °C) of the non-adhesive polymer C1, and the protruding structure formed by the non-adhesive polymer C1 was susceptible to undesirable problems such as deformation and falling off, and was difficult to maintain a good fit with the positive electrode sheet, so that both the bonding force between the composite separator and the positive electrode sheet and the cycling characteristics of the battery were obviously deteriorated. By comparing the performance test results corresponding to Example 1 and Contrast Example 2, it was found that the bonding force between the composite separator and the positive electrode sheet prepared in Contrast Example 2 was significantly lower than that in Example 1, and the capacity retention rate of the high-temperature cycling of the battery was significantly lower than that in Example 1. The reason was that, under the same conditions of other materials and operations for preparing the battery, during the compositing process of the positive electrode sheet and the composite separator, the press-fit temperature T1 of Contrast Example 2 was lower than 50 °C, The press-fit temperature made it difficult for the protruding structure formed by the non-adhesive polymer C1 to sufficiently fill in relatively small pores on the surface of the positive electrode sheet, so that both the bonding force between the composite separator and the positive electrode sheet and the cycling characteristics of the battery were significantly deteriorated.

By comparing the performance test results corresponding to Example 1 and Contrast Example 3, it was found that the bonding force between the composite separator and the negative electrode sheet prepared in Contrast Example 3 was significantly lower than that in Example 1, and the capacity retention rate of the high-temperature cycling of the battery was significantly lower than that in Example 1. The reason was that, under the same conditions of other materials and operations for preparing the battery, during the compositing process of the negative electrode sheet and the composite separator, the press-fit temperature T2 of Contrast Example 3 was higher than the Tg value (40 °C) of the non-adhesive polymer C2, and the protruding structure formed by the non-adhesive polymer C2 was susceptible to undesirable problems such as deformation and falling off, and was difficult to maintain a good fit with the negative electrode sheet, so that both the bonding force between the composite separator and the negative electrode sheet and the cycling performance of the battery were obviously deteriorated. By comparing the performance test results corresponding to Example 1 and Contrast Example 4, it was found that the bonding force between the composite separator and the negative electrode sheet prepared in Contrast Example 4 was significantly lower than that in Example 1, and the capacity retention rate of the high-temperature cycling of the battery was significantly lower than that in Example 1. The reason was that, under the same conditions of other materials and operations for preparing the battery, during the compositing process of the negative electrode sheet and the composite separator, the press-fit temperature T2 of Contrast Example 4 was lower than 28 °C, The press-fit temperature made it difficult for the protruding structure formed by the non-adhesive polymer C2 to sufficiently fill relatively small pores on the surface of the negative electrode sheet, so that both the bonding force between the composite separator and the negative electrode sheet and the cycling performance of the battery were obviously deteriorated.

The performance test results of Example 1 were compared with those of Examples 2 to 3. As can be seen from Table 1, under the same conditions of other materials and operations for preparing the battery, the ratio of the particle size D₅₀ of the non-adhesive polymer C1 to the thickness of the first base coating used in Example 2 was > 4:1, and the ratio of the particle size D₅₀ of the non-adhesive polymer C1 to the thickness of the first base coating used in Example 3 was < 1.3:1, so that the bonding force between the composite separator and the positive electrode sheet was lower than that of Example 1 and the cycling capacity retention rate of the high temperature of the battery was lower than that of Example 1. Thus, compared to Examples 2 and 3, in Example 1, by further reasonably setting the ratio of the particle size D₅₀ of the non-adhesive polymer C1 to the thickness of the first base coating, it is conducive to ensuring that the non-adhesive polymer C1 can be stably and firmly embedded in the first base coating of the composite separator, and thereby it is further conducive to enabling the protruding structure formed by the non-adhesive polymer C1 to be stably and firmly embedded in pores of the positive electrode sheet, so as to enable the bonding effect and fit between the composite separator and the positive electrode sheet to be improved, resulting in better cycling performance of the lithium battery.

The performance test results of Example 1 were compared with those of Examples 4 to 5. As can be seen from Table 1, under the same conditions of other materials and operations for preparing the battery, the ratio of the particle size D₅₀ of the non-adhesive polymer C2 to the thickness of the second base coating used in Example 4 was > 4:1, and the ratio of the particle size D₅₀ of the non-adhesive polymer C2 to the thickness of the second base coating used in Example 5 was < 1.3:1, so that the bonding force between the composite separator and the negative electrode sheet was lower than that of Example 1 and the cycling capacity retention rate of the high temperature of the battery was lower than that of Example 1. Thus, compared to Examples 4 and 5, in Example 1, by further reasonably setting the ratio of the particle size D₅₀ of the non-adhesive polymer C2 to the thickness of the second base coating, it was conducive to ensuring that the non-adhesive polymer C2 was capable of being stably and firmly embedded in the second base coating of the composite separator, and thereby it was further conducive to enabling the protruding structure formed by the non-adhesive polymer C2 to be stably and firmly embedded in pores of the negative electrode sheet, so as to enable the bonding effect and fit between the composite separator and the negative electrode sheet to be improved, resulting in better cycling performance of the lithium battery.

The performance test results of Example 1 were compared with those of Example 6. As can be seen from Table 1, under the same conditions of other materials and operations for preparing the battery, in Example 6, a content of non-adhesive polymer C1 in the first coating slurry for forming the positive-side porous active layer of the composite separator was low, so that the bonding force between the composite separator and the positive electrode is lower than that of Example 1 and the capacity retention rate of the high-temperature cycling of the battery was lower than that of Example 1. Thus, compared to Example 6, in Example 1, by effectively adjusting the content of the non-adhesive polymer C1 in the positive-side porous active layer, a sufficient amount of protruding structures were formed on the surface of the composite separator, which effectively increased the probability of the non-adhesive polymer C1 being embedded in the first anode active coating of the positive electrode sheet, so that the bonding effect and fit between the composite separator and the positive electrode sheet were improved. Moreover, the above content of the non-bonding agent polymer C1 with the high Tg value can effectively ensure the heat shrinkage performance and air permeability effect of the separator, thereby further making the cycle performance of the lithium battery better.

The performance test results of Example 1 were compared with those of Examples 8 to 9. As can be seen from Table 1, under the same conditions of other materials and operations for preparing the battery, the content of non-adhesive polymer C2 in the second coating slurry for forming the negative-side porous active layer of the composite separator was low in Example 8, but the content of non-adhesive polymer C2 in the second coating slurry for forming the negative-side porous active layer of the composite separator was high in Example 9, so that the bonding force between the composite separator and the negative electrode sheet was lower than that of Example 1, and the capacity retention rate of the high temperature cycling of the battery was lower than that of Example 1. Thus, compared to Examples 8 and 9, in Example 1, by effectively adjusting the content of the non-adhesive polymer C2 in the negative-side porous active layer, the appropriate content of the non-adhesive polymer C2 with the low Tg value was capable of not only ensuring the excellent thermal contraction performance of the composite separator, but also ensuring an appropriate amount of the protruding structures on the surface of the composite separator, so that the fit between the composite separator and the negative electrode sheet was maintained at a high level, and thereby, the bonding effect and fit between the composite separator and the negative electrode sheet were improved, resulting in better cycling performance of the lithium battery.

By comparing the performance test results corresponding to Example 1 and Contrast Example 10, it was found that the bonding force between the composite separator and the positive electrode sheet prepared in Example 10 was lower than that in Example 1, and the capacity retention rate of the high-temperature cycling of the battery was lower than that in Example 1. The reason was that, under the same conditions of other materials and operations for preparing the battery, the non-adhesive polymer C1 with a Tg value higher than 90 °C was used in Example 10, and the elasticity of the non-adhesive polymer C1 was poor, which made it difficult to sufficiently fill the relatively small pores of the positive electrode sheet during the compositing process, with a press-fit temperature T1 of 52 °C, of the positive electrode sheet and the composite separator, so that both the bonding force between the composite separator and the positive electrode sheet and the cycling performance of the battery were reduced. By comparing the performance test results corresponding to Example 1 and Example 11, it was found that the bonding force between the composite separator and the negative electrode sheet prepared in Example 11 is lower than that in Example 1, and the capacity retention rate of the high temperature cycling of the battery is lower than that in Example 1. The reason was that, under the same conditions of other materials and operations for preparing the battery, the non-adhesive polymer C2 with a Tg value higher than 90 °C was used in Example 11, and the elasticity of the non-adhesive polymer C2 was not sufficient to sufficiently fill the pores of the negative electrode sheet during the compositing process, with a press temperature T2 of 30 °C, of the negative electrode sheet and the composite separator, so that both the bonding force between the composite separator and the negative electrode sheet and the cycling performance of the battery was reduced.

## Claims

1. A cell, comprising a positive electrode sheet, a composite separator and a negative electrode sheet provided in sequence; wherein
the positive electrode sheet comprises a positive electrode current collector and a first positive electrode active coating, which is provided on a surface of the positive electrode current collector facing the composite separator; the negative electrode sheet comprises a negative electrode current collector and a first negative electrode active coating, which is provided on a surface of the negative electrode current collector facing the composite separator;
the composite separator comprises a porous substrate layer, a positive-side porous active layer, and a negative-side porous active layer, wherein a surface of the porous substrate layer facing the positive electrode sheet is a first surface, the positive-side porous active layer is provided on the first surface, a surface of the porous substrate layer facing the negative electrode sheet is a second surface, and the negative-side porous active layer is provided on the second surface;
the positive-side porous active layer comprises a first base coating and a non-adhesive polymer C1 embedded in the first base coating, a particle size D₅₀ of the non-adhesive polymer C1 > a thickness of the first base coating; the negative-side porous active layer comprises a second base coating and a non-adhesive polymer C2 embedded in the second base coating, a particle size D₅₀ of the non-adhesive polymer C2 > a thickness of the second base coating;
a compaction density of the first positive electrode active coating is in a range of 2.05 g/cm³ to 3.60 g/cm³;
a compaction density of the first negative electrode active coating is in a range of 1.40 g/cm³ to 1.85 g/cm³;
composite of the positive electrode sheet and the composite separator is realized by press-fit processing I, wherein a press-fit temperature T1 of the press-fit processing I satisfies 50 °C ≤ T1 < a Tg value of the non-adhesive polymer C1, and a press-fit pressure of the press-fit processing I is not less than 0.2 tons; and
composite of the negative electrode sheet and the composite separator is realized by press-fit processing II, wherein a press-fit temperature T2 of the press-fit processing II satisfies 28 °C ≤ T2 < a Tg value of the non-adhesive polymer C2, and a press-fit pressure of the press-fit processing II is not less than 0.2 tons.

2. The cell according to claim 1, wherein a ratio of the particle size D₅₀ of the non-adhesive polymer C1 to the thickness of the first base coating is (1.3-4): 1.

3. The cell according to claim 1, wherein the thickness of the first base coating is in a range of 1 µm to 4 µm, the particle size D₅₀ of the non-adhesive polymer C1 is in a range of 3 µm to 7 µm, and a thickness of the first positive electrode active coating is in a range of 40 µm to 150 µm.

4. The cell according to any one of claims 1 to 3, wherein a ratio of the particle size D₅₀ of the non-adhesive polymer C2 to the thickness of the second base coating is (1.3-4): 1.

5. The cell according to claim 1, wherein the thickness of the first base coating is in a range of 1 µm to 4 µm, the particle size D₅₀ of the non-adhesive polymer C2 is in a range of 3 µm to 7 µm, and a thickness of the first negative electrode active coating is in a range of 40 µm to 100 µm.

6. The cell according to any one of claims 1 to 5, wherein a mass percentage of the non-adhesive polymer C1 in the positive-side porous active layer is in a range of 3% to 22%.

7. The cell according to claim 6, wherein the mass percentage of the non-adhesive polymer C1 in the positive-side porous active layer is in a range of 17% to 22%.

8. The cell according to any one of claims 1 to 7, wherein a mass percentage of the non-adhesive polymer C2 in the negative-side porous active layer is a range of 2% to 17%.

9. The cell according to claim 8, wherein the mass percentage of the non-adhesive polymer C2 in the negative-side porous active layer is a range of 7% to 12%.

10. The cell according to any one of claims 1 to 9, wherein the Tg value of the non-adhesive polymer C1 is in a range of 55 °C to 90 °C.

11. The cell according to any one of claims 1 to 10, wherein the Tg value of the non-adhesive polymer C2 is in a range of 30 °C to 90 °C.

12. The cell according to any one of claims 1 to 11,
wherein the press-fit temperature T1 of the press-fit processing I is in a range of 50 °C to 70 °C, and the press-fit pressure of the press-fit processing I is in a range of 0.2 tons to 14 tons; and
the press-fit temperature T2 of the press-fit processing II is in a range of 28 °C to 48 °C, and the press-fit pressure of the press-fit processing II is in a range of 0.2 tons to 14 tons.

13. The cell according to any one of claims 1 to 12, wherein the first positive electrode active coating comprises a first positive electrode active material, and a particle size D₅₀ of the first positive electrode active material is in a range of 0.1 µm to 20 µm; and wherein the first negative electrode active coating comprises a first negative electrode active material, and a particle size D₅₀ of the first negative electrode active material is in a range of 0.1 µm to 20 µm.

14. The cell according to claim 13, wherein the first positive electrode active material comprises at least one of lithium iron phosphate, lithium manganese iron phosphate, ternary material, lithium cobaltate, and lithium manganate.

15. A lithium battery comprising a cell as claimed in any one of claims 1 to 14.
